# EUROPÄISCHE PATENTSCHRIFT

(11) **EP 2 498 338 B1**
(45) Veröffentlichungstag und Bekanntmachung des Hinweises auf die Patenterteilung: **18.12.2013**
(21) Anmeldenummer: 11305267.4
(22) Anmeldetag: 11.03.2011
(51) Int. Cl.: F16B 35/00, H01R 4/36, H01R 11/09, F16B 31/02

(54) **Anordnung mit einer als Rohrstück ausgeführten Klemme aus Metall und mindestens einer Klemmschraube**
Assembly with a terminal executed as tubular piece of metal and at least one clamping screw
Ensemble avec une borne constitué d'un elément tubulaire à métal et au moins une vis de serrage

(43) Veröffentlichungstag der Anmeldung: 12.09.2012
(73) Patentinhaber: Nexans, 75008 Paris (FR)
(72) Erfinder: Markgraf, Volker, 95195, Röslau (DE); Dr. Stauch, Gert, 95032, Hof (DE)
(74) Vertreter: Döring, Roger

(56) Entgegenhaltungen:
- EP-A1- 0 750 723
- EP-A1- 1 626 187
- EP-A1- 2 226 899

## Beschreibung

Die Erfindung bezieht sich auf eine Anordnung gemäß dem Oberbegriff des Patentanspruchs.

Eine solche Anordnung geht beispielsweise aus der EP 0 750 723 B1hervor.

Eine in einer derartigen Anordnung eingesetzte, auch als "Abreißschraube" bzw. "Abscherschraube" bezeichnete Klemmschraube - im folgenden kurz "Schraube" genannt - wird beispielsweise in der Starkstromtechnik zum Verbinden der elektrischen Leiter zweier Starkstromkabel eingesetzt. Zur Erzielung und Aufrechterhaltung eines elektrisch gut leitenden Kontakts, ist eine feste Verbindung zwischen den Leitern zweier Kabel und einer rohrförmigen Klemme aus Metall erforderlich, in welche die Leiter eingesteckt sind. Eine solche Klemme besteht mit Vorteil aus einer Aluminiumlegierung. Die feste Verbindung könnte durch Verwendung eines sogenannten Drehmomentschlüssels sichergestellt werden, der beim Anziehen der Schraube dann "durchdreht", wenn ein ausreichender Festsitz derselben erreicht ist. So ein Drehmomentschlüssel steht aber auf einer Baustelle oft nicht zur Verfügung. Die Schraube wird daher in der Regel mit einem anderen Werkzeug festgedreht, beispielsweise mit einem einfachen Schraubenschlüssel. Um sicherzustellen und auch um überprüfen zu können, daß die Schraube ausreichend fest angezogen ist, kann sie als Abscherschraube mit mindestens einer Sollbruchstelle ausgerüstet sein, die in ihrem axialen Verlauf als umlaufende Nut angeordnet ist. Der obere Teil der Schraube wird dann abgeschert, wenn die Festigkeit ihrer Sollbruchstelle erreicht ist bzw. überschritten wird. Der danach fehlende Schraubenkopf ist ein Indiz dafür, daß die Schraube ausreichend fest angezogen ist. Die Schraube ragt nach dem Abscheren des Schraubenkopfes nicht oder nur unwesentlich aus der Klemme heraus. Ein über derselben zu montierendes Isolierelement wird daher weder mechanisch beschädigt, noch in seinen Isoliereigenschaften beeinträchtigt. Die Sollbruchstelle unterbricht aber das Gewinde der Schraube, so daß dessen Tragfähigkeit geschwächt wird. Das macht sich um so mehr ungünstig bemerkbar, je mehr derartige Sollbruchstellen bei einer Schraube vorhanden sind. Ein universeller Einsatz solcher Schrauben für Leiter unterschiedlichster Durchmesser ist daher nur mit Einschränkungen möglich. Es ist außerdem oft nicht zu vermeiden, daß Teile der abgescherten Schraube störend aus der Klemme herausragen.

Die EP 1 626 187 A1 beschreibt eine Abreißschraube, die als zylindrischer Gewindestift mit einer kegelförmigen Bohrung ausgeführt ist. In der Bohrung ist ein als einfacher Zylinderstift ausgebildetes Schubelement angeordnet. Die Abreißschraube hat auf ihrer ganzen Länge ein Außengewinde, mittels dessen sie in eine Gewindebohrung eines Klemmkörpers eingeschraubt und auf welches eine Überwurfmutter aufgeschraubt werden kann. Die Überwurfmutter liegt in Montageposition an dem aus der Bohrung der Abreißschraube herausragenden Schubelement an. Durch Drehung der Überwurfmutter mittels eines Werkzeugs wird die Abreißschraube im Zusammenwirken mit dem Schubelement entlang einer Abrisslinie abgerissen, wenn sie ausreichend fest an im Klemmkörper angeordneten Leiteradern anliegt.

Aus der EP 2 226 899 A1 geht eine Vorrichtung zum Verbinden von zwei elektrischen Leitern hervor, die eine als Rohrstück ausgeführte metallische Klemme aufweist, in deren Wandung mindestens zwei Gewindelöcher angeordnet sind. Zur Festlegung von elektrischen Leitern in der Klemme sind in Montageposition Klemmschrauben in die Gewindelöcher eingeschraubt, die mit ihren Stirnflächen fest an den Leitern anliegen. In einem weiteren Gewindeloch der Klemme ist in Montageposition eine Fixierschraube angeordnet, die mit einer keilförmigen Spitze an den Stirnseiten der in die Klemme eingesteckten Leiter anliegt. Die Spitze ist mit einem zum Außengewinde der Fixierschraube gegenläufigen Gewinde in dieselbe eingeschraubt.

Die Schraube nach der eingangs erwähnten EP 0 750 723 B 1 weist in ihrem Verlauf mehrere, als umlaufende Nuten ausgebildete Sollbruchstellen auf, die parallel und mit axialem Abstand zueinander im Gewindeteil der Schraube angeordnet sind. Die Schraube ist außerdem mit einem zentralen Sackloch mit polygonalem Querschnitt ausgerüstet, das bis in die Nähe der am nächsten zur Schraubenspitze liegenden Sollbruchstelle liegt. Zur Betätigung der Schraube ist ein Drehkörper vorgesehen, der aus einem zur Einführung in das Sackloch bestimmten Stift mit polygonalem Querschnitt und einer denselben mit Abstand rundum umgebenden Haube besteht, an welcher der Stift befestigt ist und die außen eine Sechskantmutter zum Anlegen eines Werkzeugs aufweist. Für diese bekannte Schraube gilt wegen der größeren Anzahl von Sollbruchstellen der bereits beschriebene Mangel der verminderten Tragfähigkeit in erhöhtem Maße. Außerdem ist auch diese Schraube nur für das Festlegen von Leitern mit vorgegebenen Abmessungen einsetzbar, wenn verhindert werden soll, daß Teile der abgescherten Schraube störend aus der Klemme herausragen.

Der Erfindung liegt die Aufgabe zugrunde, die eingangs geschilderte Schraube so zu gestalten, daß sie ohne Einschränkung ihrer Tragfähigkeit zum Festlegen von in einer Klemme befindlichen Leitern mit beliebigen Abmessungen geeignet ist.

Diese Aufgabe wird entsprechend den kennzeichnenden Merkmalen des Patentanspruchs gelöst,

Wesentlicher Teil dieser Schraube ist das Kontaktteil, welches die eigentliche Schraube zum Festlegen eines Leiters in einer Klemme ist. Das Kontaktteil hat nur eine der Abscherung dienende Sollbruchstelle, deren Position im Verlauf des Kontaktteils nahezu beliebig und insbesondere vom Durchmesser eines in einer Klemme festzulegenden Leiters unabhängig ist. Die Sollbruchstelle muß nur weit genug von der Kontaktfläche des Kontaktteils entfernt sein, damit nach dem Abscheren des oberen Teils desselben eine ausreichende Länge verbleibt, auf welcher das Betätigungsteil gedreht werden kann. Das Kontaktteil wird mittels eines Werkzeugs kontinuierlich solange im Gewindeloch einer Klemme gedreht, bis seine Kontaktfläche an einem in der Klemme befindlichen, einen beliebigen Durchmesser aufweisenden Leiter anliegt und mit vorgegebener Kraft gegen denselben gepreßt wird. Sobald der gewünschte Festsitz des Kontaktteils bzw. der Schraube erreicht ist, wird der obere Teil des Kontaktteils abgeschert. Es ist dabei grundsätzlich ohne Bedeutung, wie lang der verbleibende Teil des Kontaktteils ist und wie weit derselbe aus der Klemme herausragt, solange das Betätigungsteil drehbar auf demselben verbleiben kann. Dieser Teil des Kontaktteils wird abschließend durch das Betätigungsteil abgerissen, sobald dasselbe auf der Klemme aufliegt und mittels des Werkzeugs weitergedreht wird.

Ein Ausführungsbeispiel des Erfindungsgegenstandes ist in den Zeichnungen dargestellt.

Es zeigen:
Fig. 1 schematisch eine Verbindungsstelle zwischen den Leitern zweier elektrischer Kabel im Schnitt.
Fig. 2 die beiden Teile einer Klemmschraube nach der Erfindung voneinander getrennt.
Fig. 3 die Klemmschraube mit zusammengefügten Teilen.
Fig. 4 eine Draufsicht auf die Klemmschraube.
Fig. 5 bis 10 unterschiedliche Positionen der Klemmschraube bei ihrer Betätigung.

Im folgenden wird weiter statt des Wortes "Klemmschraube" das kürzere Wort "Schraube" verwendet. Das Kontaktteil der Schraube besteht aus einem ausreichend festen, vorzugsweise elektrisch gut leitenden Metall, beispielsweise aus Messing oder einer Aluminiumlegierung. Das Betätigungsteil der Schraube kann beispielsweise aus Stahl bestehen.

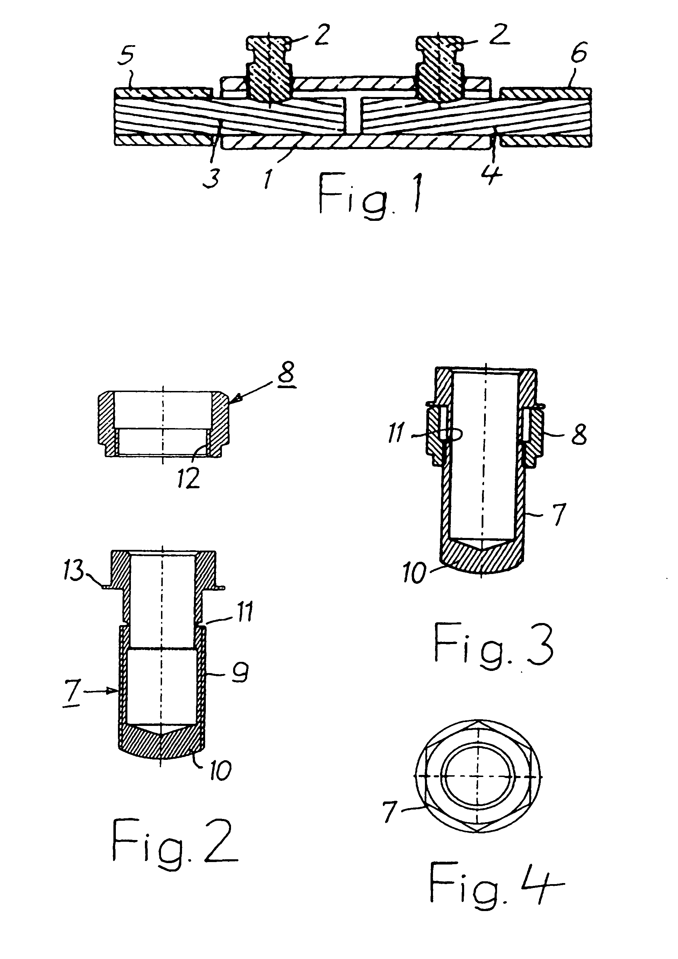

In Fig. 1 ist eine beispielsweise aus einer verzinnten Aluminiumlegierung bestehende, als Rohrstück ausgeführte Klemme 1 dargestellt. Sie hat zwei Gewindebohrungen, in denen jeweils eine mit einem Außengewinde versehene Schraube 2 angeordnet ist. In die Klemme 1 ragen von zwei unterschiedlichen Seiten her elektrische Leiter 3 und 4 zweier elektrischer Kabel 5 und 6 hinein, bei denen es sich insbesondere um Energiekabel handelt. Sie sind in Montageposition durch die Schrauben 2 in der Klemme 1 festgelegt und dadurch elektrisch leitend miteinander verbunden. Die elektrischen Leiter 3 und 4 sind in bevorzugter Ausführungsform als mehrdrähtige Leiter ausgeführt. Sie bestehen vorzugsweise aus Aluminium oder Kupfer. Die Leiter 3 und 4 können auch aus Segmenten aufgebaut sein, in denen jeweils Einzeldrähte zusammengefaßt sind.

Die Schraube 2 besteht aus zwei miteinander zu verschraubenden Teilen, einem Kontaktteil 7 und einem Betätigungsteil 8. Das Kontaktteil 7 ist als zylindrischer Hohlkörper mit einem Außengewinde 9 ausgeführt. Es hat eine zur Anlage an einem elektrischen Leiter 3 bzw. 4 bestimmte Kontaktfläche 10. Im Verlauf des Kontaktteils 7 ist eine umlaufende Sollbruchstelle 11 angebrocht, deren Position an sich beliebig ist. Sie muß nur einen deutlichen Abstand von der Kontaktfläche 10 haben, damit das mit einem Innengewinde 12 versehene, als Rohrstück ausgeführte Betätigungsteil 8 aufgeschraubt werden kann. Das Außengewinde 9 erstreckt sich mit Vorteil nur von der Kontaktfläche 10 bis zur Sollbruchstelle 11 des Kontaktteils 7. Das Kontaktteil 7 kann an seinem der Kontaktfläche 10 abgewandten Ende einen umlaufenden Kragen 13 haben, der als Begrenzung für ein an das Kontaktteil 7 anzulegendes Werkzeug dienen kann.

Das Kontaktteil 7 kann gemäß Fig. 4 oberhalb des Kragens 13 eine als Polygon, insbesondere als Sechseck, ausgeführte Umfangsfläche zur Anlage eines zum Drehen der Schraube 2 geeigneten Werkzeugs aufweisen. Die zentrale Öffnung des Kontaktteils 7 kann in dessen oberem Bereich aber auch einen polygonalen, vorzugsweise sechseckigen, Querschnitt zum Einsetzen eines entsprechenden Werkzeugs aufweisen. Auch das Betätigungsteil 8 kann eine als Polygon ausgeführte Umfangsfläche zum Anlegen des Werkzeugs haben.

Die Schraube 2 geht im Montagezustand aus Fig. 3 hervor. Das Betätigungsteil 8 ist dabei so auf das Kontaktteil 7 aufgeschraubt, daß es am Kragen 13 desselben anliegt. Sein Innenraum kann dabei so gestaltet sein, daß er oberhalb der Sollbruchstelle 11 des Kontaktteils 7 ohne Innengewinde erweitert ist. Der gleiche Effekt kann dann erzielt werden, wenn der Außendurchmesser des Kontaktteils 7 oberhalb der Sollbruchstelle 11 verkleinert ist, so daß ein Innengewinde eines mit einem durchgehenden Innengewinde versehenen Betätigungsteils 8 in diesem Bereich nicht greift. Das Innengewinde 12 des Betätigungsteils 8, mit welchem dasselbe auf das Kontaktteil 7 aufgeschraubt ist, befindet sich nur unterhalb der Sollbruchstelle 11 desselben.

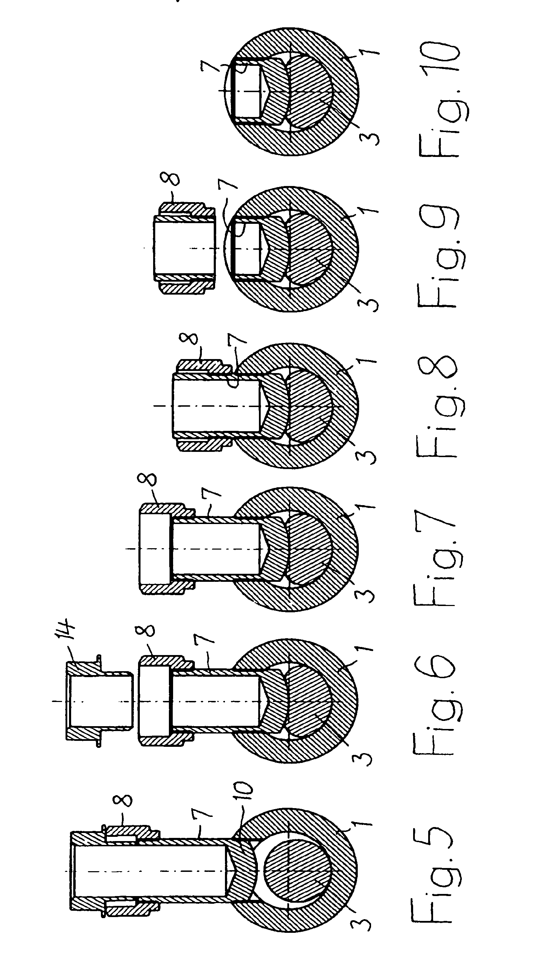

Die so fertiggestellte Schraube 2 wird entsprechend den Fig. 5 bis 10 beispielsweise wie folgt zum Befestigen eines elektrischen Leiters 3 in einer Klemme 1 gehandhabt:

Zunächst wird die gemäß Fig. 3 zusammengebaute Schraube 2 in ein Gewindeloch der Klemme 1 eingeschraubt, bis sie die aus Fig. 5 ersichtliche Position hat. Sie kann dann von Hand oder bereits mittels eines Werkzeugs - einem handelsüblichen Schraubenschlüssel - bis zur Anlage am Leiter 3 gebracht werden. Beim weiteren Drehen der Schraube 2 mittels des Werkzeugs wird der Leiter 3 zusammengedrückt. Wenn die für den Festsitz der Schraube 2 in der Klemme 1 erforderliche Anpreßkraft bei ihrem weiteren Anziehen erreicht ist oder überschritten wird, wird das Kontaktteil 7 an der Sollbruchstelle 11 abgeschert (Fig. 6).

Das abgescherte Teil 14 des Kontaktteils 7 kann entfernt werden, so daß nur noch der untere Teil des Kontaktteils 7 und das auf denselben aufgeschraubte Betätigungsteil 8 verbleiben (Fig. 7). Bei einer Drehung des Betätigungsteils 8 auf dem Kontaktteil 7, gelangt dasselbe bis zur Anlage an der Klemme 1 (Fig. 8). Wird es in dieser Position mittels des Werkzeugs mit ausreichender Kraft weitergedreht, dann wird der aus der Klemme 1 herausragende Teil des Kontaktteils 7 abgerissen (Fig. 9). Er kann zusammen mit dem Betätigungsteil 8 von der Klemme 1 abgehoben werden.

Damit der aus der Klemme 1 herausragende Teil des Kontaktteils 7 im geschilderten Sinne abgetrennt bzw. abgerissen werden kann, muß seine Wandstärke entsprechend bemessen sein. Sie muß nur groß genug sein, damit das Kontaktteil 7 die für den Festsitz der Schraube 2 auf dem Leiter 3 erforderliche Kraft übertragen kann. Eine größere Wandstärke ist nicht erforderlich. In diesem Sinne ist die Wandstärke des Kontaktteils 7 in Abhängigkeit von der Größe der durch das Werkzeug aufzubringenden Kraft zu bemessen. Die abschließende Position des festlegenden Teils des Kontaktteils 7 bzw. der Schraube 2 geht aus Fig. 10 hervor.

## Patentansprüche

1. Anordnung mit einer als Rohrstück ausgeführten Klemme (1) aus Metall und mindestens einer Klemmschraube (2) zum Befestigen eines elektrischen Leiters (3,4) in der Klemme, welche in ihrer Wandung mindestens ein mit einem Gewinde versehenes Durchgangsloch zur Aufnahme der Klemmschraube hat, die in ihrem Aufbau eine umlaufende Sollbruchstelle (11) zur Begrenzung der Kraft aufweist, welche mittels eines an der Klemmschraube angreifenden, eine Drehung um ihre Achse bewirkenden Werkzeugs auf dieselbe ausgeübt wird, **dadurch gekennzeichnet,**
- **daß** die Klemmschraube(2) ein mit einer Bohrung und einem Außengewinde (9) versehenes und in das Durchgangsloch der Klemme (1) einschraubbares Kontaktteil (7) aufweist, das an seinem einen axialen Ende eine zur Anlage an einem in der Klemme (1) befindlichen elektrischen Leiter (3,4) bestimmte Kontaktfläche (10) und außerdem ein mit einem Innengewinde (12) und einer Anlagefläche für das Werkzeug ausgerüstetes Betätigungsteil (8) hat, das in Montageposition auf das Kontaktteil (7) aufgeschraubt ist,
- **daß** das Außengewinde (9) des durch die Bohrung rohrförmig ausgeführten Kontaktteils (7) zwischen seiner Kontaktfläche (10) und der mit deutlichem Abstand zu derselben angeordneten Sollbruchstelle (11) angebracht ist und
- **daß** das Kontaktteil (7) in seinem mit dem Außengewinde (9) versehenen Bereich eine definierte Wandstärke hat, die nach Erreichen des Festsitzes der Klemmschraube (2) in der Klemme (1) durch ihre Drehung mittels des Werkzeugs und dadurch bedingtem Abscheren des oberhalb der Sollbruchstelle (11) liegenden Teils des Kontaktteils (7) zum Abreißen des aus der Klemme (1) herausragenden Bereichs des Kontaktteils durch das mittels des Werkzeugs auf dem Außengewinde (9) bis zur Anlage an der Klemme (1) gedrehte Betätigungsteil (8) führt.

## Claims

1. Device with a metallic clamp (1), which has the form of a piece of a tube and comprises at least one clamping screw (2), which clamp has in its wall at least one throughhole provided with a thread for receiving the clamping screw, which clamping screw has a circumferential intended breaking point (11) for limiting the force which can be exerted by a tool on the clamping screw and effects a rotation about its axis, **characterized in**
- **that** the clamping screw (2) has a contact part (7) provided with a bore hole and an external thread (9) and adapted to be screwed into the throughhole of the clamp (1), which contact part (7) has at its one axial end a contact surface (10) intended for contacting an electrical conductor (3,4), which is positioned in the clamp (9) and has also an actuating member (8) which comprises an internal thread and a contact surface for the tool, which in mounting position is screwed onto the contact part (7),
- **that** the external thread (9) of the because of the bore hole tube like contact part (7) is positioned between its contact surface (10) and the breaking point (11), which has an essential distance to the contact surface, and
- **that** the contact part (7) in the area of its external thread (9) has a defined wall thickness which, after reaching the tight seat of the clamping screw (2) in the clamp (1), by its rotation by means of the tool and the resulting shearing-off caused by the rotation of the portion of the contact part located above the intended breaking point (11) for tearing off the portion of the contact part (7) protruding from the clamp (1) by the actuating member (8) rotated by means of the tool.

## Revendications

1. Ensemble avec une borne (1) en métal prenant la forme d'une pièce tubulaire et avec au moins une vis de serrage (2) pour la fixation d'un conducteur électrique (3, 4) dans la borne, ladite borne ayant dans sa paroi au moins un trou traversant pourvu d'un filetage servant à recevoir la vis de serrage comportant dans sa structure une zone périphérique destinée à la rupture (11) permettant de limiter la force s'exerçant par le biais d'un outil s'engrenant au niveau de la vis de serrage et provoquant une rotation autour de son axe, **caractérisé en ce que**
- la vis de serrage (2) comporte une partie de contact (7) pourvue d'un perçage et d'un filetage extérieur (9) et pouvant être vissée dans le trou traversant de la borne (1), ladite partie ayant au niveau de son extrémité axiale une surface de contact (10) prévue pour appuyer contre un conducteur électrique (3, 4) se trouvant dans la borne (1), et en outre une partie d'actionnement (8) équipée d'un filetage intérieur (12) et d'une surface d'appui pour l'outil, et étant vissée, en position de montage, sur la partie de contact (7) ;
- le filetage extérieur (9) de la partie de contact (7) réalisée en forme de tube par le perçage est préau entre sa surface de contact (10) et le point destiné à la rupture (11) disposé à une nette distance de celle-ci ; et
- la partie de contact (7), dans sa zone munie du filetage extérieur (9), a une épaisseur de paroi définie qui conduit, après avoir atteint le point de fixation de la vis de serrage (2) dans la borne (1) par le biais de sa rotation à l'aide de l'outil et ainsi le cisaillement défini de la partie de la partie de contact (7) disposée au-dessus de la zone destinée à la rupture (11), à l'arrachement de la zone de la partie de contact ressortant de la borne (1) au moyen de la partie d'actionnement (8) tournée à l'aide de l'outil sur le filetage extérieur (9) jusqu'à l'appui contre la borne (1).
